# EUROPEAN PATENT APPLICATION

(11) **EP 1 959 576 A1**
(43) Date of publication of application: **20.08.2008**
(21) Application number: 06823572.0
(22) Date of filing: 04.12.2006
(51) Int. Cl.: H04B 1/16, H04N 5/445

(54) **BROADCAST RECEIVING APPARATUS, BROADCAST RECEIVING METHOD, AND DATA BROADCAST DISPLAY PRESENTING PROGRAM**

(30) Priority: 07.12.2005 JP 2005352969
(71) Applicant: MATSUSHITA ELECTRIC INDUSTRIAL CO., LTD., Osaka 571-8501 (JP)
(72) Inventor: OKAMURA, Masahiko Matsushita Electric Industrial Co., Ltd., 2-1-61 Shiromi, Chuo-ku Osaka 540-6207 (JP)
(74) Representative: TBK-Patent
(86) International application number: PCT/JP2006/324167
(87) International publication number: WO 2007/066614

(57) **Abstract**

In a broadcast receiving device, a broadcast signal of a data broadcast program that is tuned in to by a tuner is demodulated into a transport stream by a demodulator, and a data broadcast content is acquired by an information acquisition unit from the demodulated transport stream. The acquired data broadcast content is stored in a storage device, and a data broadcast screen based on the stored data broadcast content is presented by an information presentation unit. When a reception state is a poor state, a presentation state of the data broadcast screen is held by the information presentation unit. When the reception state changes from the poor state to a good state and the data broadcast programs received in the good states before and after the poor state are the same, the presentation of the data broadcast screen based on the stored data broadcast content is restarted by the information presentation unit.

## Description

### [Technical Field]

The present invention relates to a broadcast receiving device that receives a data broadcast, a broadcast receiving method and a data broadcast screen presentation program.

### [Background Art]

In the digital broadcasting service, data broadcasting is available along with television or audio broadcasting. Additional data broadcasting that complements the television or audio broadcasting and independent data broadcasting that is independent from the television and audio broadcasting are provided as the data broadcasting.

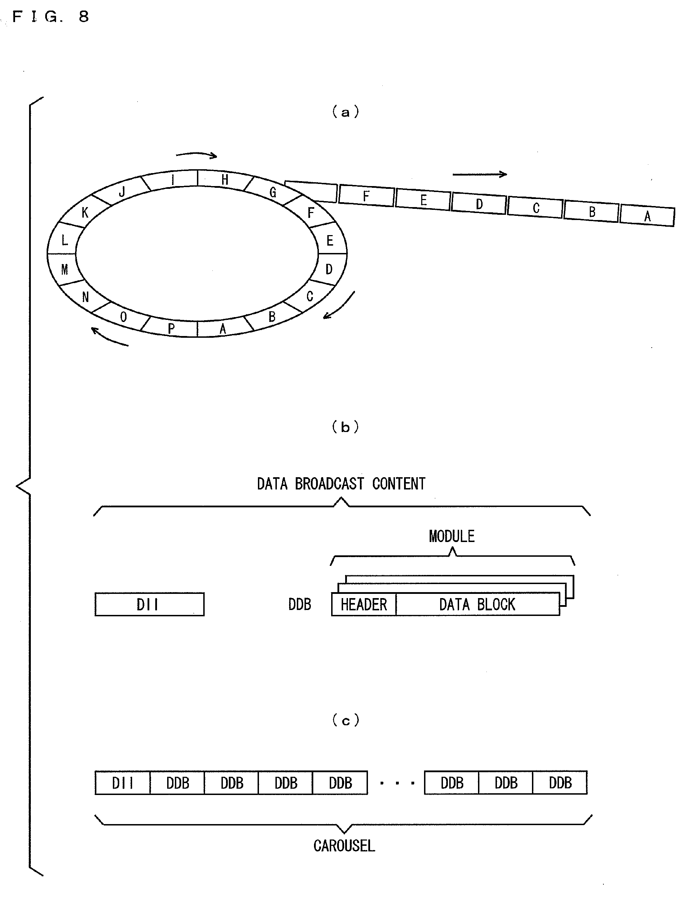

A data carousel transmission system is used in the additional data broadcasting and the independent data broadcasting. Fig. 8 is a diagram for use in explaining the data carousel transmission system. As shown in Fig. 8 (a), a plurality of modules A to P that constitute data broadcast content of each program are repeatedly transmitted in a certain cycle in the data carousel transmission system. A group of the plurality of modules A to P that constitute one data broadcast content is called a carousel. Each module is divided into a plurality of data blocks to be transmitted.

As shown in Fig. 8 (b), (c), one carousel is composed of a DII (Download Info Indication) and a plurality of DDBs (Download Data Blocks). The DII is used for transmitting management information of the plurality of modules in the carousel and includes various types of control information relating to each module in the carousel. The DDBs are used for transmitting actual module bodies and include data blocks obtained by dividing each module.

In a broadcast receiving device capable of receiving a data broadcast, when a user tunes in to a data broadcast program, the DII of the carousel is acquired, and a module that is to be initially presented is subsequently acquired to be stored in a buffer (a storage device). Next, necessary modules are sequentially acquired to be sequentially stored in the buffer. Then, data broadcast screens based on the modules stored in the buffer are sequentially presented.

Since the broadcast receiving device acquires the modules of the data broadcast content in a cycle of the carousel, the whole data broadcast content cannot be acquired as long as at least one cycle of the carousel is not completed. The cycle of the carousel differs according to the data broadcast content, reaching as long as several minutes.

When the user tunes in to another program, the buffer is rebooted, acquisition of a data broadcast content of a new program is started, and necessary modules are sequentially stored in the buffer. Then, data broadcast screens based on the modules stored in the buffer are sequentially presented. In this case, latency equivalent of as long as the cycle of the carousel occurs until the data broadcast screens based on the necessary modules are presented.

In a program-linked viewer participation data broadcast program, a viewer can operate a presented data broadcast screen. For example, the viewer can input information into a questionnaire displayed on the data broadcast screen. The information input by the viewer is transmitted to a broadcast station through a communication line such as the Internet. In this manner, bi-directional service is realized.

In the broadcasting using airwaves, the airwaves may be attenuated by troubles arising from rainfall, obstacles, transfer of the broadcast receiving device or the like.

Generally, when poor reception caused by attenuation of the airwaves occurs in the broadcast receiving device, it becomes difficult to acquire program identification information for tuning. Therefore, when a reception state changes from a poor state to a good state, program identification information is acquired again, and a tuning operation is carried out again.

As a first conventional technique, a digital broadcast receiving device capable of notifying a user of changes in a reception level of a digital broadcast signal is proposed in Patent Document 1. In the digital broadcast receiving device, errors in a transport stream packet of a receiving channel are detected, and the number of the detected errors is acquired. Then, it is determined that the reception state is deteriorated when the number of the errors acquired in a predetermined period is increased, and the reception state (reception level) at the time is displayed on a screen of a monitor in a display format corresponding to the number of the errors. Thus, the user can know the extent of the reception state. In addition, even when the screen of the monitor becomes black because of the reception failure, the user knows the reception state in advance, thereby making it possible to judge that deterioration of the reception state has caused the screen to be black

In addition, a hierarchical transmission system in which a rainfall provision broadcast is transmitted concurrently with a normal broadcast by using a plurality of modulation systems is employed in order to enable the broadcast to be received even when the reception state is deteriorated due to rainfall or the like.

As a second conventional technique, Patent Document 2 proposes a data broadcast receiving system in which unreceived modules are acquired through Internet access when the reception state is deteriorated, thereby allowing all the modules to be assembled.

In this data broadcast receiving system, a reception mode is switched to a mode of reception by Internet access when it is determined that the reception state is deteriorated. In this case, a list of the modules that has been registered in advance is acquired to detect unreceived modules, so that only the unreceived modules are acquired by the Internet access. This allows the modules that could not be received because of the poor reception state to be displayed.

Furthermore, as a third conventional technique, Patent document 3 proposes a failure-recovery method in which a display control device is recovered by a rebooting when an operation state in the display control device is a failure state. In the failure-recovery method, the display control device transmits content information that is to be displayed next as screen switching information when switching a content screen. A monitoring device receives and stores the screen switching information, and reboots the display control device when it does not receive the screen switching information for a specific period of time that has been preset. After the display control device is recovered to a normal state, the monitoring device transmits the latest screen switching information that is stored to the display control device as failure history information. The display control device restarts the display, starting at the content indicated by the trouble history information.
[Patent Document 1] JP 2000-115654 A
[Patent Document 2] JP 2001-308747 A
[Patent Document 3] JP 2002-108657 A

### Disclosure of the Invention]

### [Problems to be Solved by the Invention]

However, poor reception is caused by troubles arising from rainfall, obstacles, transfer of a broadcast receiving device or the like during reception of a data broadcast program, so that there may occur situations where part or all of data broadcast contents cannot be received. In this case, presentation of a data broadcast screen is interrupted, thereby causing a user to have stress and an uncomfortable feeling.

According to the first conventional technique, a user is notified of changes in a reception level of a digital broadcast signal, so that the user can confirm occurrence of poor reception. However, since the presentation of the data broadcast screen is interrupted during the occurrence of the poor reception, the user is caused to have stress and an uncomfortable feeling. Moreover, in a program-linked viewer participation data broadcast program, since it is extremely difficult to return the data broadcast screen that has been operated by a viewer to the same state, inconvenience is caused in operation by the viewer.

In addition, according to the second conventional technique, unreceived modules are acquired by Internet access when a reception state is deteriorated. However, an Internet access environment is not often provided in cases such as a mobile unit. In such a case, the presentation of the data broadcast screen is interrupted, thereby causing the user to have stress and an uncomfortable feeling.

Furthermore, according to the third conventional technique, when an operation state in a display control device is a failure state, the display control device is rebooted. However, in display failure caused by the poor reception, since the data broadcast content cannot be received, the display failure cannot be recovered by the rebooting. Thus, the presentation of the data broadcast screen is interrupted during occurrence of the display failure caused by the poor reception, thereby causing the user to have stress and an uncomfortable feeling. In addition, since the modules that have already been acquired are initialized by the rebooting, all the modules are required to be acquired again after recovery from the poor reception. This requires time to present the data broadcast screen.

An obj ect of the present invention is to provide a broadcast receiving device, a broadcast receiving method and a data broadcast screen presentation program capable of reducing stress and an uncomfortable feeling that the user has even when the reception state temporarily turns into the poor state.

### [Means for Solving the Problems]

(1) According to an aspect of the present invention, a broadcast receiving device includes a receiver that receives a broadcast signal of a data broadcast program that is tuned in to, an information acquirer that acquires a data broadcast content from the broadcast signal received by the receiver, a storage that stores the data broadcast content acquired by the information acquirer, and a presenter that presents a data broadcast screen based on the data broadcast content stored in the storage, the presenter holds a presentation state of the data broadcast screen when a state of reception by the receiver is a poor state, and restarts, when the state of reception by the receiver changes from the poor state to a good state and data broadcast programs received in the good state before and after the poor state are the same, the presentation of the data broadcast screen based on the data broadcast content stored in the storage.
   In the broadcast receiving device, the broadcast signal of the data broadcast program that has been tuned in to is received by the receiver, and the data broadcast content is acquired by the information acquirer from the received broadcast signal. The acquired data broadcast content is stored in the storage, and the data broadcast screen based on the stored data broadcast content is presented by the presenter. When the state of reception by the receiver is the poor state, the presentation state of the data broadcast screen is held by the presenter. When the state of reception by the receiver changes from the poor state to the good state and the data broadcast programs received in the good state before and after the poor state are the same, the presentation of the data broadcast screen based on the stored data broadcast content is restarted by the presenter.
   Accordingly, a user can view the data broadcast screen when the state of reception has been the good state even in a case where the state of reception turns into the poor state during viewing of the data broadcast screen, and can view a continuation of the data broadcast screen of the same program when the state of reception returns to the good state and the same program is continuously received. This reduces stress and an uncomfortable feeling that the user has even when the state of reception temporarily turns into the poor state.
(2) The presenter may terminate, when the state of reception by the receiver changes from the poor state to the good state and the data broadcast programs received in the good state before and after the poor state are different, the presentation of the data broadcast screen that has been held.
   When the programs received before and after the poor state of reception are different, the presentation of the data broadcast screen that has been held during a period where the state of reception has been the poor state is terminated. Thus, in a case where the user desires to view another program, the presentation of the data broadcast screen that has been held during the period of the poor state is immediately terminated when the state of reception returns from the poor state to the good state. This prevents the user from having stress and an uncomfortable feeling caused by presentation of a data broadcast screen of an undesired program.
(3) The storage may store, when the state of reception by the receiver changes from the poor state to the good state and the data broadcast programs received in the good state before and after the poor state are different, the data broadcast content acquired by the information acquirer in the good state after the poor state.
   When the programs received before and after the poor state of reception are different, the data broadcast content acquired after the poor state is stored. Thus, in a case where the user desires to view another program, a data broadcast content of another program is immediately acquired when the state of reception returns from the poor state to the good state. Accordingly, the user can view the data broadcast screen of the desired program after a short time when the state of reception returns from the poor state to the good state.
(4) The broadcast receiving device may further include a selector that selects, when the state of reception by the receiver changes from the poor state to the good state and the data broadcast programs received in the good state before and after the poor state are the same, restarting the presentation of the data broadcast screen based on the data broadcast content stored in the storage or terminating the presentation of the data broadcast screen that has been held, and the presenter may, based on selection by the selector, restart the presentation of the data broadcast screen based on the data broadcast content stored in the storage or terminate the presentation of the data broadcast screen that has been held.
   When the programs received before and after the poor state of reception are the same, the user can select, when the state of reception returns from the poor state to the good state, restarting the presentation of the data broadcast screen or terminating the data broadcast screen that has been held. This causes the presentation of the data broadcast screen that meets the user's requirement to be realized.
(5) The information acquirer may further acquire program identification information for identifying a program from the broadcastsignalreceived by the receiver,the broadcast receiving device may further include a program determiner that determines whether or not the data broadcast programs received by the receiver in the good state before and after the poor state are the same based on the program identification information acquired by the information acquirer before and after the state of reception by the receiver is the poor state.
   In this case, determination as to whether or not the data broadcast programs received before and after the poor state of reception are the same can be easily made based on the program identification information.
(6) The broadcast receiving device may further include a state determiner that determines whether the state of reception is the good state or the poor state based on an error of the broadcast signal received by the receiver.
   In this case, determination as to whether the state of reception is the good state or the poor state can be easily made based on the error of the broadcast signal that is received.
(7) The broadcast receiving device may further include an operation unit that operates the data broadcast screen presented by the presenter and a communicator that transmits data indicating a content of operation by the operation unit to a broadcast station.
   In this case, the user can operate the data broadcast screen, thereby transmitting various types of information to the broadcast station. Accordingly,bi-directionaldata broadcastservice can be realized.
(8) The broadcast receiving device may further include an operation restrictor that restricts, when the state of reception by the receiver is the poor state, the operation of the data broadcast screen held by the presenter.
   Since the presented data broadcast screen is not updated when the state of reception is the poor state, problems may occur in the operation of the data broadcast screen by the user. Thus, problems in the operation of the data broadcast screen can be prevented by restricting, when the state of reception is the poor state, the operation of the data broadcast screen that is held.
(9) The operation restrictor may permit, when the operation of the data broadcast screen can be carried out based on the data broadcast content stored in the storage, the operation of the data broadcast screen held by the presenter, and inhibit, when the operation of the data broadcast screen cannot be carried out based on the data broadcast content stored in the storage, the operation of the data broadcast screen held by the presenter.
   Even when the state of reception is the poor state, the operation of the data broadcast screen can be carried out in some cases based on the data broadcast content stored in the storage. In such a case, since problems do not occur in the operation of the data broadcast screen by the user, the operation of the data broadcast screen that is held is permitted. Thus, the user can carry out continuous operation of the data broadcast screen that is held even when the state of reception is the poor state.
   Meanwhile, when the state of reception is the poor state, the operation of the data broadcast screen cannot be carried out in some cases based on the data broadcast content stored in the storage. In such a case, since problems may occur in the operation of the data broadcast screen by the user, the operation of the data broadcast screen that is held is inhibited. This prevents problems in the operation of the data broadcast screen.
(10) The broadcast receiving device may further include a notifier that notifies a user that the operation of the data broadcast screen is inhibited by the operation restrictor.
   When the operation of the data broadcast screen is inhibited, the user is notified of that. This prevents the user from operating the data broadcast screen when the operation of the data broadcast screen is inhibited. This prevents the user from feeling stress.
(11) According to another aspect of the present invention, a broadcast receiving method includes the steps of receiving a broadcast signal of a data broadcast program that is tuned in to, acquiring a data broadcast content from the broadcast signal that is received, storing the data broadcast content that is acquired, and presenting a data broadcast screen based on the data broadcast content that is stored, and the step of presenting includes holding a presentation state of the data broadcast screen when a state of reception is a poor state and restarting, when the state of reception changes from the poor state to the good state and data broadcast programs received in the good state before and after the poor state are the same, the presentation of the data broadcast screen based on the data broadcast content that is stored.
   In the broadcast receiving method, the broadcast signal of the data broadcast program that is tuned in to is received, and the data broadcast content is acquired from the received broadcast signal. The acquired data broadcast content is stored, and the data broadcast screen based on the stored data broadcast content is presented. When the state of reception is the poor state, the presentation state of the data broadcast screen is held. When the state of reception changes from the poor state to the good state and the data broadcast programs received in the good state before and after the poor state are the same, the presentation of the data broadcast screen based on the stored data broadcast content is restarted.
   Accordingly, a user can view the data broadcast screen when the state of reception has been the good state even in a case where the state of reception turns into the poor state during viewing of the data broadcast screen, and can view a continuation of the data broadcast screen of the same program when the state of reception returns to the good state and the same program is continuously received. This reduces stress and an uncomfortable feeling that the user has even when the state of reception temporarily turns into the poor state.
(12) The step of presenting may include terminating, when the state of reception changes from the poor state to the good state and the data broadcast programs received in the good state before and after the poor state are different, the presentation of the data broadcast screen that has been held.
   When the programs received before and after the poor state of reception are different, the presentation of the data broadcast screen that has been held during a period where the state of reception has been the poor state is terminated. Thus, in a case where the user desires to view another program, the presentation of the data broadcast screen that has been held during the period of the poor state is immediately terminated when the state of reception returns from the poor state to the good state. This prevents the user from having stress and an uncomfortable feeling caused by presentation of a data broadcast screen of an undesired program.
(13) The broadcast receiving method may further include the step of selecting, when the state of reception changes from the poor state to the good state and the data broadcast programs received in the good state before and after the poor state are the same, restarting the presentation of the data broadcast screen based on the data broadcast content that is stored or terminating the presentation of the data broadcast screen that has been held, and the step of presenting may include, based on selection in the step of selecting, restarting the presentation of the data broadcast screen based on the data broadcast content that is stored or terminating the presentation of the data broadcast screen that has been held.
   When the programs received before and after the poor state of reception are the same, the user can select, when the state of reception returns from the poor state to the good state, restarting the presentation of the data broadcast screen or terminating the data broadcast screen that has been held. This causes the presentation of the data broadcast screen that meets the user's requirement to be realized.
(14) The broadcast receiving method may further include the steps of operating the data broadcast screen that is presented, and transmitting data indicating a content of the operation to a broadcast station.
   In this case, the user can operate the data broadcast screen, thereby transmitting various types of information to the broadcast station. Accordingly, bi-directional data broadcast service can be realized.
(15) The broadcast receiving method may further include the step of restricting, when the state of reception is the poor state, the operation of the data broadcast screen that is held.
   Since the presented data broadcast screen is not updated when the state of reception is the poor state, problems may occur in the operation of the data broadcast screen by the user. Thus, problems in the operation of the data broadcast screen can be prevented by restricting, when the state of reception is the poor state, the operation of the data broadcast screen that is held.
(16) According to still another aspect of the present invention, a data broadcast screen presentation program that can be executed by a computer for presenting a data broadcast screen based on a broadcast signal of a data broadcast that is received causes the computer to execute the processes of acquiring a data broadcast content from the broadcast signal that is received, storing the data broadcast content that is acquired, and presenting the data broadcast screen based on the data broadcast content that is stored, and the process of presenting includes holding a presentation state of the data broadcast screen when a state of reception is a poor state and restarting, when the state of reception changes from the poor state to a good state and data broadcast programs received in the good state before and after the poor state are the same, the presentation of the data broadcast screen based on the data broadcast content that is stored.
   According to the data broadcast screen presentation program, the data broadcast content is acquired from the received broadcast signal. The acquired data broadcast content is stored, and the data broadcast screen based on the stored data broadcast content is presented. When the state of reception is the poor state, the presentation state of the data broadcast screen is held. When the state of reception changes from the poor state to the good state and the data broadcast programs received in the good state before and after the poor state are the same, the presentation of the data broadcast screen based on the stored data broadcast content is restarted.
   Accordingly, a user can view the data broadcast screen when the state of reception has been the good state even in a case where the state of reception turns into the poor state during viewing of the data broadcast screen, and can view a continuation of the data broadcast screen of the same program when the state of reception returns to the good state and the same program is continuously received. This reduces stress and an uncomfortable feeling that the user has even when the state of reception temporarily turns into the poor state.
(17) The process of presenting may include terminating, when the state of reception changes from the poor state to the good state and the data broadcast programs received in the good state before and after the poor state are different, the presentation of the data broadcast screen that has been held.
   When the programs received before and after the poor state of reception are different, the presentation of the data broadcast screen that has been held during a period where the state of reception has been the poor state is terminated. Thus, in a case where the user desires to view another program, the presentation of the data broadcast screen that has been held during the period of the poor state is immediately terminated when the state of reception returns from the poor state to the good state. This prevents the user from having stress and an uncomfortable feeling caused by presentation of a data broadcast screen of an undesired program.
(18) The data broadcast screen presentation program may cause the computer to further execute the process of selecting, when the state of reception changes from the poor state to the good state and the data broadcast programs received in the good state before and after the poor state are the same, restarting the presentation of the data broadcast screen based on the data broadcast content that is stored or terminating the presentation of the data broadcast screen that has been held, and the process of presenting may include, based on selection in the process of selecting, restarting the presentation of the data broadcast screen based on the data broadcast content that is stored or terminating the presentation of the data broadcast screen that has been held.
   When the programs received before and after the poor state of reception are the same, the user can select, when the state of reception returns from the poor state to the good state, restarting the presentation of the data broadcast screen or terminating the data broadcast screen that has been held. This causes the presentation of the data broadcast screen that meets the user's requirement to be realized.
(19) The data broadcast screen presentation program may cause the computer to further execute the processes of operating the data broadcast screen that is presented, and transmitting data indicating a content of the operation to a broadcast station.
   In this case, the user can operate the data broadcast screen, thereby transmitting various types of information to the broadcast station. Accordingly, bi-directional data broadcast service can be realized.
(20) The data broadcast screen presentation program may cause the computer to further execute the process of restricting, when the state of reception is the poor state, the operation of the data broadcast screen that has been held.

Since the presented data broadcast screen is not updated when the state of reception is the poor state, problems may occur in the operation of the data broadcast screen by the user. Thus, problems in the operation of the data broadcast screen can be prevented by restricting, when the state of reception is the poor state, the operation of the data broadcast screen that has been held.

### [Effects of the Invention]

According to the present invention, a user can view a data broadcast screen at the time when a reception state has been a good state even in a case where the reception state turns into a poor state during viewing of the data broadcast screen, and can view a continuation of the data broadcast screen of the same program when the reception state returns to the good state and the same program is continuously received. This reduces stress and an uncomfortable feeling that a user has even when the reception state temporarily turns into the poor state.

### [Brief Description of the Drawings]

[FIG. 1] FIG. 1 is a block diagram showing a configuration of a broadcast receiving device according to a first embodiment of the present invention.
[FIG. 2] FIG. 2 is a flowchart showing procedures of presentation processing of a data broadcast screen in the broadcast receiving device according to the first embodiment of the present invention.
[FIG. 3] FIG. 3 is a flowchart showing procedures of presentation processing of a data broadcast screen in a broadcast receiving device according to a second embodiment of the present invention.
[FIG. 4] FIG. 4 is a diagram showing an example of a user operation screen.
[FIG. 5] FIG. 6 is a block diagram showing a configuration of a broadcast receiving device according to a third embodiment of the present invention.
[FIG. 6] FIG. 6 is a flowchart showing procedures of presentation processing of a data broadcast screen in a broadcast receiving device according to a third embodiment of the present invention.
[FIG. 7] FIG. 7 is a flowchart showing procedures of presentation processing of a data broadcast screen in a broadcast receiving device according to a fourth embodiment of the present invention.
[FIG. 8] FIG. 8 is a diagram for use in explaining a data carousel transmission system.

### [Best Mode for Carrying out the Invention]

### (1) First Embodiment

### (1-1) Configuration of a broadcast receiving device

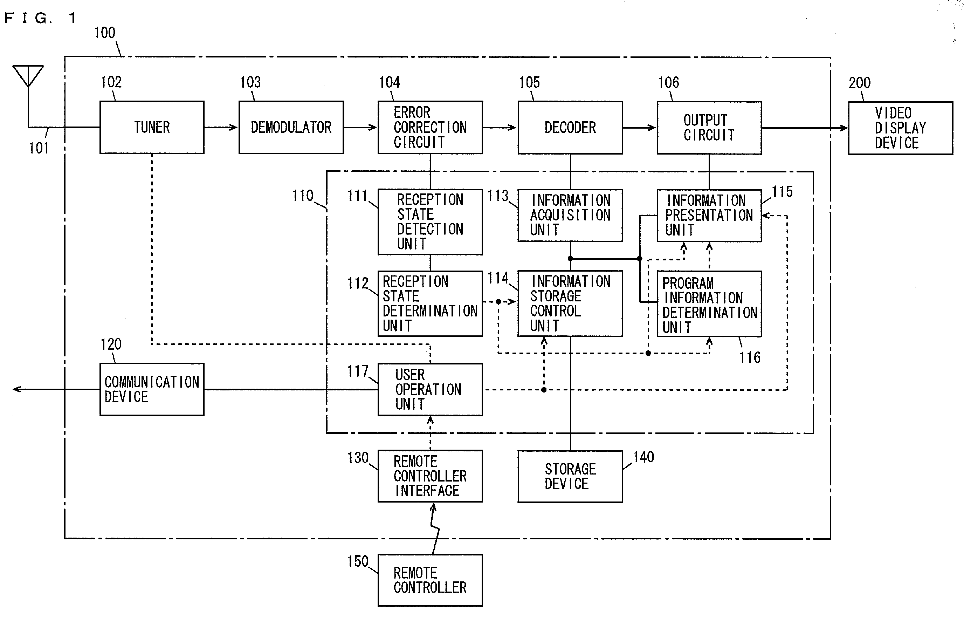

Fig. 1 is a block diagram showing a configuration of a broadcast receiving device according to a first embodiment of the present invention.

In Fig. 1, the broadcast receiving device 100 is used for receiving a digital broadcast. In the digital broadcast, contents of a television broadcast, an audio broadcast and a data broadcast are transmitted from a broadcast station.

The content of the data broadcast is called a data broadcast content. The data broadcast content is constituted by a plurality of modules. Eachmodule is divided into a plurality of data blocks to be transmitted. An image that is displayed based on the data broadcast content is called a data broadcast screen. Hereinafter, functions, mainly relating to presentation of the data broadcast content, of the broadcast receiving device 100 are described.

The broadcast receiving device 100 according to the present embodiment is provided in a mobile terminal such as an on-vehicle television or a personal digital assistant, for example, and can be used in an environment in which a level of received signals changes every second due to its travel.

A video display device 200 such as a liquid crystal display panel or a plasma display panel is connected to the broadcast receiving device 100. Thus, a user (viewer) can view a digital broadcast program. A television receiver may be connected to the broadcast receiving device 100.

The broadcast receiving device 100 includes an antenna 101, a tuner 102, a demodulator 103, an error correction circuit 104, a decoder 105, an output circuit 106, a processing unit 110, a communication device 120, a remote controller interface 130 and a storage device 140.

The processing unit 110 includes a reception state detection unit 111, a reception state determination unit 112, an information acquisition unit 113, an information storage control unit 114, an information presentation unit 115, a program information determination unit 116 and a user operation unit 117. A function of each component in the processing unit 110 is implemented by a microcomputer such as a CPU (central processing unit) and a processing program. The processing program includes a data broadcast screen presentation program that is described later.

The antenna 101 receives airwaves transmitted from the broadcast station. The tuner 102 converts the airwaves received by the antenna 101 into a plurality of digital-modulatedbroadcast signals, and selects the broadcast signal corresponding to a channel that is tuned in to by the user from the plurality of broadcast signals.

The demodulator 103 demodulates the broadcast signal output from the tuner 102 into a transport stream. The error correction circuit 104 corrects a data error, which is generated in transmission or conversion, of the transport stream.

The decoder 105 decodes the transport stream into a video signal, an audio signal, a data signal and related information. The data signal includes a data broadcast content.

Here, the related information includes program identification information such as SI (Service Information) and PSI (Program Specific Information). The service information and the program specific information are defined in ARIB TR-B14 (Operational Guidelines for Digital Terrestrial Broadcasting), and used for tuning in to a program.

The output circuit 106 outputs the video signal and the audio signal supplied from the decoder 105 or the data broadcast content supplied from the information presentation unit 115, described later, to the video display device 200.

The video display device 200 outputs sound while displaying video based on the video signal and the audio signal, and presents the data broadcast screen based on the data broadcast content.

The storage device 140 is a storage medium in which various types of information and various types of data are stored so as to be rewritten, and is composed of a RAM (random access memory), a hard disk and the like, for example. Writing and reading operations of the data broadcast content and the program identification information in and from the storage device 140 and an erasing operation are controlled by the information storage control unit 114, described later.

The remote controller interface 130 supplies an operation signal and various types of data transmitted from the remote controller 150 by a user' s operation to the user operation unit 117. The user operation unit 117 supplies the operation signal and the various types of data supplied from the remote controller interface 130 to the information presentation unit 115 and the communication device 120. The communication device 120 transmits the various types of data to the broadcast station through a communication line such as Internet, for example.

The reception state detection unit 111 detects the reception state of the airwaves based on a rate of occurrence of the data errors corrected in the error correction circuit 104. In this case, the reception state is represented by a value. The reception state determination unit 112 determines whether the reception state is good or poor by comparing the value, detected by the reception state detection unit 111, representing the reception state with a constant threshold value. Specifically, the reception state determination unit 112 determines that the reception state is good (hereinafter called a good reception state) when the value representing the reception state is at least the threshold value, and determines that the reception state is poor (hereinafter called a poor reception state) when the value representing the reception state is lower than the threshold value. The result of the determination made by the reception state determination unit 112 is supplied to the information storage control unit 114, the information presentation unit 115 and the program information determination unit 116 as a reception state message.

The information acquisition unit 113 acquires the program identification information of the program that is currently tuned in to from the related information decoded by the decoder 105 while sequentially acquiring the plurality of modules of the data broadcast content from the data signal decoded by the decoder 105. In the present embodiment, the information acquisition unit 113 acquires the service information as the programidentification information.

The information storage control unit 114 controls the writing operation of the data broadcast content and the program identification information in the storage device 140, the reading operation of the data broadcast content and the program identification information from the storage device 140 and the erasing operation of the data broadcast content and the program identification information stored in the storage device 140.

That is, the information storage control unit 114 sequentially acquires the plurality of modules of the data broadcast content from the storage device 140 to supply the modules to the information presentation unit 115 while sequentially writing the plurality of modules of the data broadcast content acquired by the information acquisition unit 113 in the storage device 140. When a receiving channel is switched by a user's operation, the information storage control unit 114 carries out reboot processing. In the reboot processing, modules of a data broadcast content of a new program acquired by the information acquisition unit 113 are sequentially written from its beginning to its end in the storage device 140 while the modules of the data broadcast content are sequentially read from its beginning to its end from the storage device 140 to be supplied to the information presentation unit 115.

Moreover, the information storage control unit 114 keeps writing the program identification information in the storage device 140 during a period where the result of the determination made by the reception state determination unit 112 indicates the good reception state. When the result of the determination indicates the poor reception state, the information storage control unit 114 does not write the program identification information acquired by the information acquisition unit 113 in the storage device 140.

The program information determination unit 116 compares the program identification information read from the storage device 140 by the information storage control unit 114 with the program identification information acquired by the information acquisition unit 113, and determines whether or not the programs indicated by the both program identification information are the same based on the result of comparison when the result of the determination made by the reception state determination unit 112 changes from the good reception state to the poor reception state. The result of the determination made by the program information determination unit 116 is supplied to the information presentation unit 115 as a program information message.

The information presentation unit 115 supplies to the output circuit 106 the data broadcast content acquired by the information acquisition unit 113 or the data broadcast content read from the storage device 140 by the information storage control unit 114 based on the result of the determination made by the program information determination unit 116 and the operation of the remote controller 150. This causes the data broadcast screen based on the data broadcast content to be presented in the video display device 200.

### (1-2) Presentation processing of the data broadcast screen

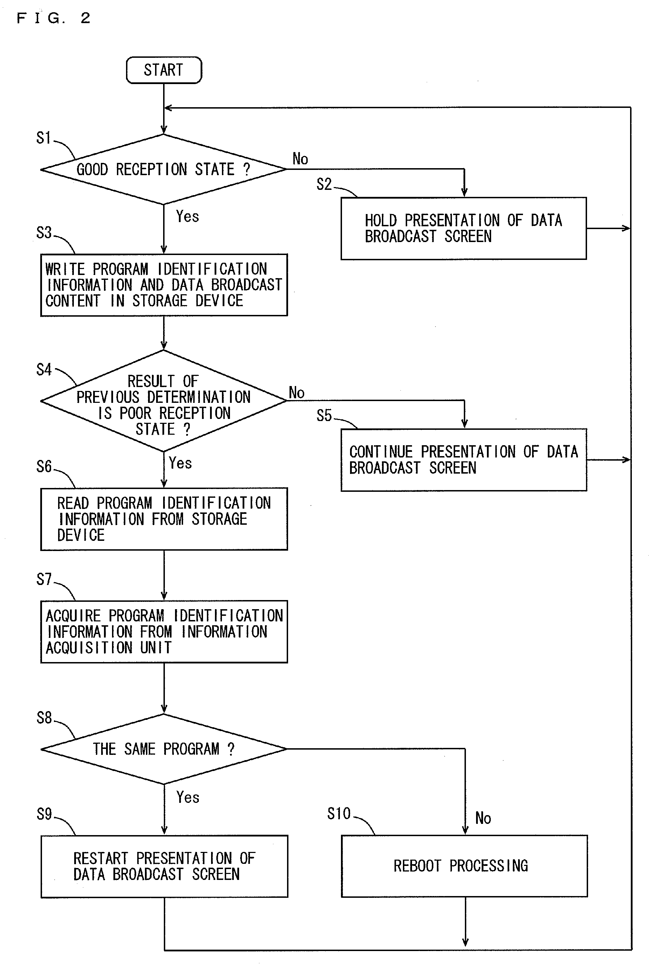

Next, procedures of presentation processing of the data broadcast screen in the broadcast receiving device 100 according to the first embodiment are explained with reference to Fig. 2. Fig. 2 is a flowchart showing the procedures of the presentation processing of the data broadcast screen in the broadcast receiving device according to the first embodiment of the present invention. The presentation processing of the data broadcast screen is implemented by the data broadcast screen presentation program of the processing unit 110.

The reception state detection unit 111 always detects the reception state of the airwaves based on the rate of the occurrence of the data errors corrected in the error correction circuit 104. When the reception state is good, the information storage control unit 114 sequentially writes the modules of the data broadcast content acquired by the information acquisition unit 113 in the storage device 140. Moreover, the information presentation unit 115 sequentially supplies to the output circuit 106 the modules of the data broadcast content read from the storage device 140 by the information storage control unit 114. Accordingly, the data broadcast screens based on the data broadcast contents of the program that is currently tuned in to are sequentially presented in the video display device 200.

In this case, the user can operate the presented data broadcast screen using the remote controller 150. For example, the user can input data into the presented data broadcast screen. The data input from the remote controller 150 is supplied to the user operation unit 117 through the remote controller interface 130. The data supplied to the user operation unit 117 is transmitted to the broadcast station by the communication device 120 through the communication line such as Internet.

The reception state determination unit 112 determines whether or not the reception state is the good reception state by comparing the value, detected by the reception state detection unit 111, representing the reception state with the constant threshold value (step S1).

When the result of the determination made by the reception state determination unit 112 is the poor reception state, the information storage control unit 114 does not write the module of the data broadcast content acquired by the information acquisition unit 113 in the storage device 140, and the information presentation unit 115 holds the presentation of the data broadcast screen by holding the module of the data broadcast content that is to be supplied to the output circuit 106 (step S2). This causes the presentation state of the data broadcast screen before the poor reception state to be held. In this state, the module of the data broadcast content acquired before the poor reception state is stored in the storage device 140. After this, the procedure returns to the step S1.

When the result of the determination made by the reception state determination unit 112 is the good reception state in step S1, the information storage control unit 114 writes the program identification information and the module of the data broadcast content acquired by the information acquisition unit 113 in the storage device 140 (step S3). Then, the information storage control unit 114 judges whether or not the result of the previous determination made by the reception state determination unit 112 is the poor reception state (step S4).

When the result of the previous determination is the good reception state, the information presentation unit 115 continues supply of the modules of the data broadcast content to the output circuit 106, thereby continuing the presentation of the data broadcast screen (step S5). Thus, the data broadcast screens are sequentially updated based on the modules of the received data broadcast contents during the period of the good reception state.

In this case, the user can operate the presented data broadcast screen using the remote controller 150. For example, the user can input data into the presented data broadcast screen. After this, the procedure returns to step S1.

When the result of the previous determination is the poor reception state in step S4, the information storage control unit 114 reads the program identification information from the storage device 140 (step S6), and acquires the program identification information, which is currently received, from the information acquisition unit 113 (step S7). Then, the information storage control unit 114 judges whether or not the program that is currently received and the program that has been received before the poor reception state are the same by comparing the program identification information read from the storage device 140 with the program identification information acquired from the information acquisition unit 113 (step S8).

When the program that is currently received and the program that has been received before the poor reception state are the same, the information acquisition unit 113 sequentially acquires modules following the module of the data broadcast content that has already been acquired before the poor reception state. The information storage control unit 114 sequentially writes the modules acquired by the information acquisition unit 113 in the storage device 140. Moreover, the information storage control unit 114 restarts reading the data broadcast content from the storage device 140 and sequentially supplies modules following the last module that has been read before the poor reception state to the information presentation unit 115. The information presentation unit 115 sequentially supplies modules following the module, which has been held, of the data broadcast content to the output circuit 106, thereby restarting the presentation of the data broadcast screen (step S9). Thus, the data broadcast screens of the same program are sequentially presented, following the data broadcast screen of the program that has been presented before the poor reception state.

In this case, the user can operate the data broadcast screen, following his or her operation of the data broadcast screen before the poor reception state. For example, the user can input data following the data that has been input into the data broadcast screen before the poor reception state. After this, returning to step S1, the processes in steps S1 to S10 are repeated.

When the program that is currently received and the program that has been received before the poor reception state are different in step S8, the information storage control unit 114 carries out the reboot processing (step S10). In this case, the information storage control unit 114 sequentially writes modules of a data broadcast content of a program that is newly tuned in to from its beginning in the storage device 140. Moreover, the information storage control unit 114 sequentially reads from the storage device 140 the modules of the data broadcast content from its beginning. The information presentation unit 115 terminates the supply of the data broadcast content that has been held, and sequentially supplies to the output circuit 106 the modules of the data broadcast content of the program that is newly tuned in to from its beginning. Accordingly, the presentation of the data broadcast screen that has been held is terminated, and the data broadcast screens of the program that is currently received are sequentially presented form its beginning.

In this case, the user can operate the data broadcast screen that is newly presented using the remote controller 150. For example, the user can input data into the data broadcast screen that is newly presented. After this, returning to step S1, the processes in steps S1 to S10 are repeated.

### (1-3) Effects of the first embodiment

In the present embodiment, the user can view the data broadcast screen at the time when the reception state has been the good state even in a case where the reception state turns into the poor state during viewing of the data broadcast screen, and can view a continuation of the data broadcast screen of the same program in a case where the reception state returns to the good state and the same program is continuously received. Thus, the user can view the data broadcast while feeling little stress even when the reception state temporarily turns into the poor state.

In addition, when the programs received before and after the poor reception state are different, the modules of the data broadcast content of the program that is newly tuned in to are sequentially written in the storage device 140 while the presentation of the data broadcast screen that has been held during a period where the reception state has been the poor state is terminated. Accordingly, the user can view the data broadcast screen of the new program after a short time when the reception state returns from the poor state to the good state.

### (2) Second embodiment

A broadcast receiving device according to a second embodiment of the present invention has the same configuration as the broadcast receiving device 100 according to the first embodiment, while its procedures of the presentation processing of the data broadcast screen are different.

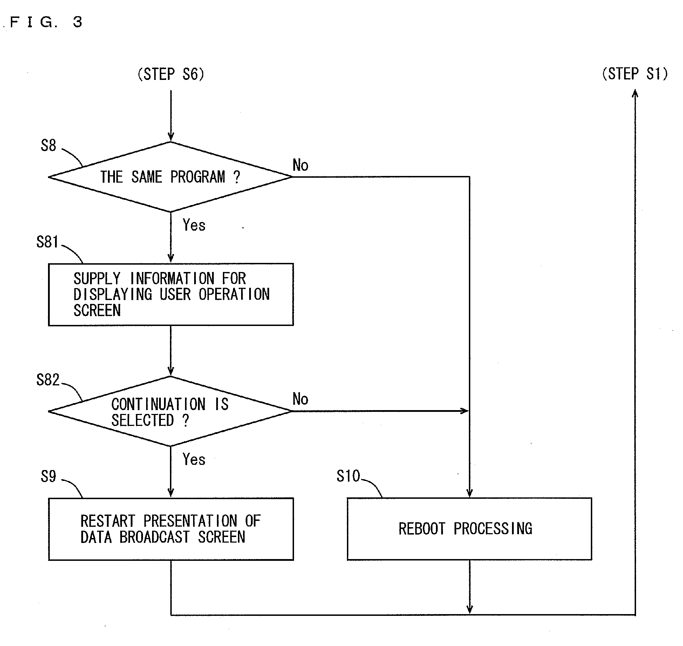

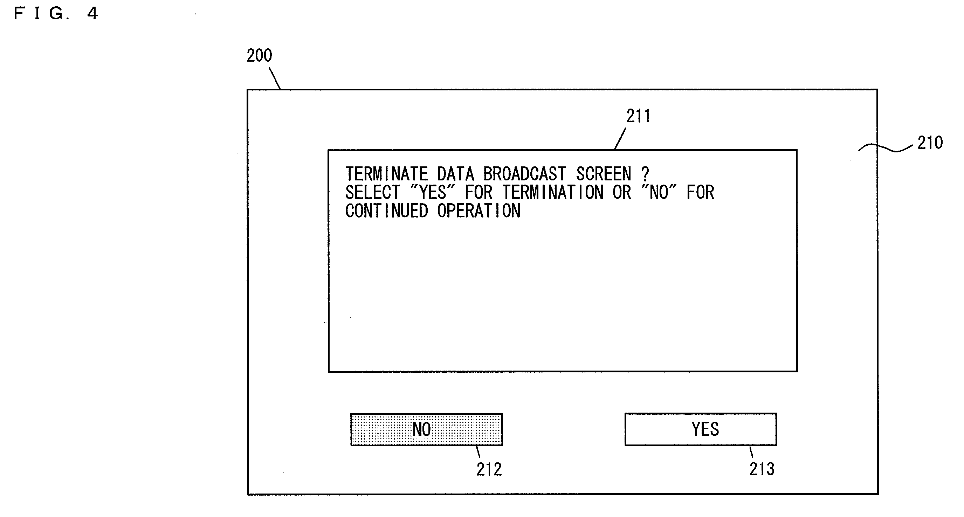

Fig. 3 is a flowchart showing the procedures of the presentation processing of the data broadcast screen in the broadcast receiving device according to the second embodiment. Fig. 4 is a diagram showing an example of a user operation screen.

Processes in steps S1 to S7 are the same as the processes in steps S1 to S7 shown in Fig. 2.

In step S8, the information storage control unit 114 judges whether or not the program that is currently received and the program that has been received before the poor reception state are the same by comparing the program identification information read from the storage device 140 with the program identification information acquired from the information acquisition unit 113.

When the program that is currently received and the program that has been received before the poor reception state are the same, the information presentation unit 115 supplies information for displaying a user operation screen to the output circuit 106 (step S81). Thus, the user operation screen shown in Fig. 4 is displayed on the video display device 200 as a user interface.

In Fig. 4, the user operation screen 210 is displayed on the video display device 200. In the user operation screen 210, a selection request screen 211 that requests selection of either continuation or termination of the presentation of the data broadcast screen, a continuation selection button 212 for selecting continuation of the presentation of the data broadcast screen and a termination selection button 213 for selecting termination of the presentation of the data broadcast screen are displayed.

The user can select continuation or termination of the presentation of the data broadcast screen by causing the continuation selection button 212 or the termination selection button 213 to be highlighted using the remote controller 150.

While "NO" is displayed in the continuation selection button 212 and "YES" is displayed in the termination selection button 213 in the example shown in Fig. 4, the content of the question shown in the selection request screen 211 may be changed to have the opposite meaning, so that "YES" is displayed in the continuation selection button 212 and "NO" is displayed in the termination selection button 213.

The user operation unit 117 judges whether or not continuation of the presentation of the data broadcast screen is selected by the user using the remote controller 150 (step S82).

When continuation of the presentation of the data broadcast screen is selected, the information storage control unit 114 restarts reading the modules of the data broadcast content from the storage device 140 and the information presentation unit 115 restarts supply of modules following the module of the data broadcast content that has been held, so that the presentation of the data broadcast screen is restarted (step S9). This causes the data broadcast screens of the same program to be sequentially presented, following the data broadcast screen of the program that has been presented before the poor reception state.

In this case, the user can operate the data broadcast screen, following his or her operation of the data broadcast screen before the poor reception state. For example, the user can input data following the data input into the data broadcast screen before the poor reception state.

When termination of the presentation of the data broadcast screen is selected, the information storage control unit 114 carries out the reboot processing (step S10). In this case, the information storage control unit 114 sequentially writes the modules of the data broadcast content of the program that is newly tuned in to in the storage device 140 from its beginning. Moreover, the information storage control unit 114 sequentially reads the modules of the data broadcast content from its beginning from the storage device 140. The information presentation unit 115 terminates supply of the data broadcast content that has been held and sequentially supplies to the output circuit 106 the modules of the data broadcast content of the program that is newly tuned in to from its beginning. Thus, the presentation of the data broadcast screen that has been held is terminated, and the data broadcast screens of the program that is currently received are sequentially presented from its beginning.

In this case, the user can operate the data broadcast screen from the beginning. For example, the user can again input the data into the data broadcast screen from the beginning.

Note that when the program that is currently received and the program that has been received before the poor reception state are different in step S7, the information storage control unit 114 proceeds to step S10 and carries out the reboot processing.

According to the present embodiment, in a case where the programs received before and after the poor reception state are the same, the user can select, when the reception state returns from the poor state to the good state, either restarting the presentation of the data broadcast screen or terminating the held data broadcast screen. This causes the presentation of the data broadcast screen that meets the user' s requirement to be realized.

### (3) Third embodiment

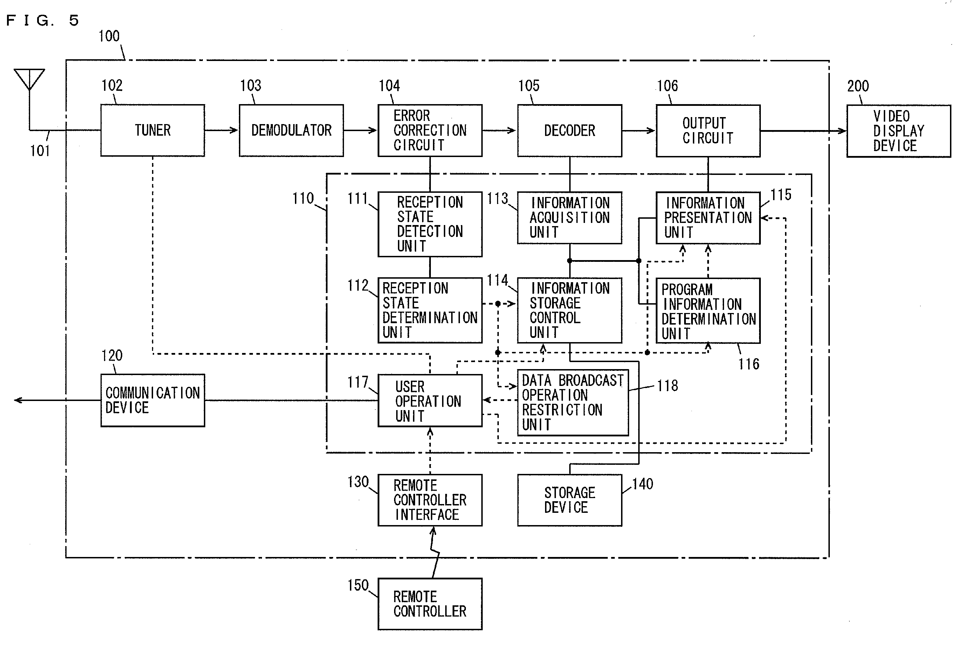

Fig. 5 is a block diagram showing a configuration of a broadcast receiving device according to a third embodiment of the present invention.

The broadcast receiving device 100 of Fig. 5 is different from the broadcast receiving device 100 of Fig. 1 in that the processing unit 110 further includes a data broadcast operation restriction unit 118. The data broadcast operation restriction unit 118 restricts the operation of the data broadcast screen by the user during the period of the poor reception state.

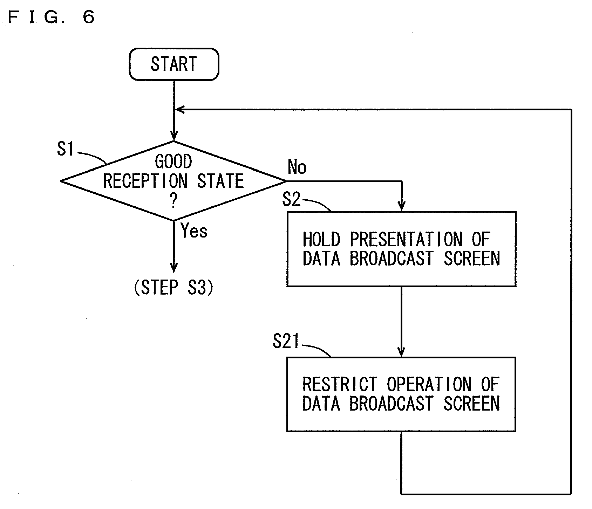

Fig. 6 is a flowchart showing procedures of the presentation processing of the data broadcast screen in the broadcast receiving device according to the third embodiment of the present invention.

Processes in steps S1 to S10 are the same as the processes in steps S1 to S10 shown in Fig. 2. In the broadcast receiving device 100 in the third embodiment, the information presentation unit 115 holds the module of the data broadcast content that is to be supplied to the output circuit 106 in step S2, and the data broadcast operation restriction unit 118 then restricts the operation of the data broadcast screen by the user (step S21).

In the poor reception state, since the module of the data broadcast content stored in the storage device 140 is not updated, problems may occur in the operation of the broadcast screen by the user. Therefore, the data broadcast operation restriction unit 118 controls the user operation unit 117 so that the operation using the remote controller 150 becomes invalid. For example, the data broadcast operation restriction unit 118 controls the user operation unit 117 so that the data input using the remote controller 150 is not transmitted to the broadcast station by the communication device 120. In this case, indication that the operation of the data broadcast screen by the user is restricted is made by displaying characters or images and outputting sound in the video display device 200. After this, returning to step S1, the processes in steps S1 to S10 are repeated.

According to the present embodiment, the operation of the held data broadcast screen is restricted when the reception state is the poor state, so that problems in the operation of the data broadcast screen can be prevented.

### (4) Forth embodiment

A broadcast receiving device according to a fourth embodiment has the same configuration as the broadcast receiving device 100 according to the third embodiment, while procedures of the presentation processing of the data broadcast screen are different.

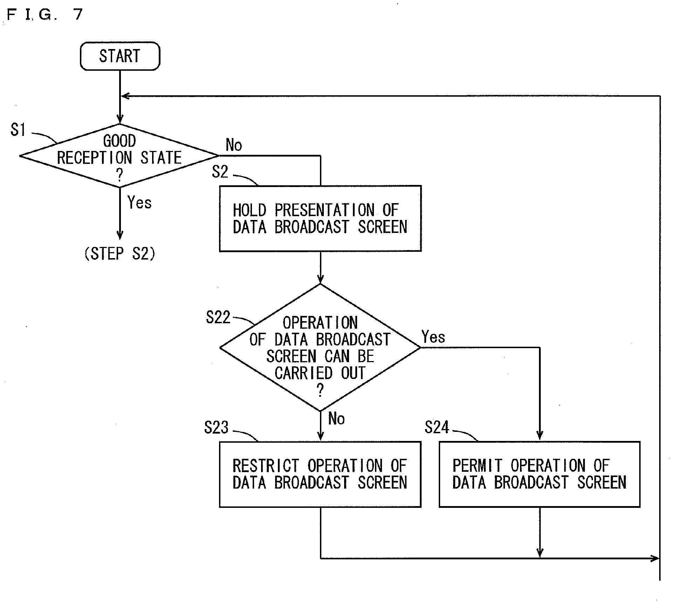

Fig. 7 is a flowchart showing procedures of the presentation processing of the data broadcast screen in a broadcast receiving device according to a fourth embodiment of the present invention.

Processes in the steps S1 to S10 are the same as the processes in steps S1 to S10 shown in Fig. 2. In the broadcast receiving device 100 in the fourth embodiment, the information presentation unit 115 holds the module of the data broadcast content that is to be supplied to the output circuit 106 in step S2, and the data broadcast operation restriction unit 118 subsequently judges whether or not the operation of the data broadcast screen can be carried out by the user based on the module of the data broadcast content stored in the storage device 140 (step S22).

When the operation of the data broadcast screen cannot be carried out, the data broadcast operation restriction unit 118 restricts the operation of the data broadcast screen by the user (steps S23). In this case, the data broadcast operation restriction unit 118 controls the user operation unit 117 so that the operation using the remote controller 150 becomes invalid. For example, the data broadcast operation restriction unit 118 controls the user operation unit 117 so that data that has been input using the remote controller 150 is not transmitted to the broadcast station by the communication device 120. In this case, indication that the operation of the data broadcast screen by the user is restricted is made by displaying characters or images and outputting sound in the video display device 200. After this, returning to step S1, the processes in steps S1 to S10 are repeated.

Since problems in the operation of the data broadcast screen by the user do not occur when the operation of the data broadcast screen can be carried out, the data broadcast operation restriction unit 118 permits the operation of the data broadcast screen by the user (step S24). In this case, the user can input data into the data broadcast screen being presented, for example. After this, returning to steps S1, the processes in steps S1 to 10 are repeated.

When a reference to the module that is not stored in the storage device 140 is made in the operation of the data broadcast screen by the user, for example, it is judged that the operation of the data broadcast screen cannot be carried out in step S22. Accordingly, the operation of the data broadcast screen is restricted.

According to the present embodiment, during the period of the poor reception state, when the operation of the data broadcast screen can be carried out based on the module of the data broadcast content stored in the storage device 140, the operation of the held data broadcast screen is permitted. Thus, the user can continuously operate the held data broadcast screen even when the reception state is the poor state.

Meanwhile, during the period of the poor reception state, when the operation of the data broadcast screen cannot be carried out based on the module of the data broadcast content stored in the storage device 140, the operation of the held data broadcast screen is inhibited. Thus, problems in the operation of the data broadcast screen can be prevented.

### (5) Other embodiments

While the service information is used as the program identification information in the above-described embodiments, other program identification information may be used. For example, the program specific information may be used.

While continuation and termination of the presentation of the data broadcast screen are selected by using the continuation selection button 212 and the termination selection button 213 in the user operation screen 210 of the video display device 200 in the above-described second embodiment, the present invention is not limited to this and a dedicated button for selecting continuation or termination of the presentation of the data broadcast screen may be provided in the remote controller 150. Moreover, continuation or termination of the presentation of the data broadcast screen may be selected by using a button for general purpose provided in the remote controller 150.

In the above-described third and fourth embodiments, a display unit or a sound output unit may be provided in the remote controller 150 in order to notify the user that the operation of the data broadcast screen is restricted.

Each functional block of the processing unit 110 is not limited to the examples shown in Figs. 1 and 5. For example, one functional block of the processing unit 110 in Fig. 1 or 5 may have a function of another functional block.

While the processing unit 110 is implemented by a microcomputer and a processing program in the above-described embodiments, part or all of the components of the processing unit 110 may be constituted by hardware such as an electronic circuit.

### (6) Correspondences between elements in the claims and parts in embodiments

In the following paragraphs, non-limiting examples of correspondences between various elements recited in the claims below and those described above with respect to various preferred embodiments of the present invention are explained.

In the above-described embodiments, the tuner 102 and the decoder 103 are examples of a receiver, the information acquisition unit 113 is an example of an information acquirer, the storage device 140 is an example of a storage, and the information presentation unit 115 is an example of a presenter.

Moreover, the remote controller 150 and the user operation unit 117 are examples of a selector, the program information determination unit 116 is an example of a program determiner, and the reception state detection unit 111 and the reception state determination unit 112 are examples of a state determiner.

Furthermore, the remote controller 150 and the user operation unit 117 are examples of an operation unit, the communication device 120 is an example of a communicator, the data broadcast operation restriction unit 118 is an example of an operation restrictor, and the video display device 200 is an example of a notifier.

As each of various elements recited in the claims, various other elements having configurations or functions described in the claims can be also used.

### [Industrial Applicability]

The present invention is applicable to a broadcast receiving device and the like that are used in an environment where a reception state is likely to temporarily be a poor state.

## Claims

1. A broadcast receiving device comprising:
a receiver that receives a broadcast signal of a data broadcast program that is tuned in to;
an information acquirer that acquires a data broadcast content from the broadcast signal received by said receiver;
a storage that stores the data broadcast content acquired by said information acquirer; and
a presenter that presents a data broadcast screen based on the data broadcast content stored in said storage, wherein
said presenter holds a presentation state of said data broadcast screen when a state of reception by said receiver is a poor state, and restarts, when the state of reception by said receiver changes from the poor state to a good state and data broadcast programs received in the good state before and after said poor state are the same, the presentation of the data broadcast screen based on the data broadcast content stored in said storage.

2. The broadcast receiving device according to claim 1, wherein said presenter terminates, when the state of reception by said receiver changes from the poor state to the good state and the data broadcast programs received in said good state before and after said poor state are different, the presentation of the data broadcast screen that has been held.

3. The broadcast receiving device according to claim 2, wherein said storage stores, when the state of reception by said receiver changes from the poor state to the good state and the data broadcast programs received in the good state before and after said poor state are different, the data broadcast content acquired by said information acquirer in the good state after said poor state.

4. The broadcast receiving device according to claim 1, further comprising a selector that selects, when the state of reception by said receiver changes from the poor state to the good state and the data broadcast programs received in the good state before and after said poor state are the same, restarting the presentation of the data broadcast screen based on the data broadcast content stored in said storage or terminating the presentation of the data broadcast screen that has been held, wherein
said presenter, based on selection by said selector, restarts the presentation of the data broadcast screen based on the data broadcast content stored in said storage or terminates the presentation of said data broadcast screen that has been held.

5. The broadcast receiving device according to claim 1, wherein said information acquirer further acquires program identification information for identifying a program from the broadcast signal received by said receiver,
said broadcast receiving device further comprising a program determiner that determines whether or not the data broadcast programs received by said receiver in the good state before and after the poor state are the same based on the program identification information acquired by said information acquirer before and after the state of reception by said receiver is the poor state.

6. The broadcast receiving device according to claim 1, further comprising a state determiner that determines whether the state of reception is the good state or the poor state based on an error of the broadcast signal received by said receiver.

7. The broadcast receiving device according to claim 1, further comprising
an operation unit that operates the data broadcast screen presented by said presenter, and
a communicator that transmits data indicating a content of operation by said operation unit to a broadcast station.

8. The broadcast receiving device according to claim 7, further comprising an operation restrictor that restricts, when the state of reception by said receiver is the poor state, the operation of the data broadcast screen held by said presenter.

9. The broadcast receiving device according to claim 8, wherein said operation restrictor permits, when the operation of the data broadcast screen can be carried out based on the data broadcast content stored in said storage, the operation of the data broadcast screen held by said presenter, and inhibits, when the operation of the data broadcast screen cannot be carried out based on the data broadcast content stored in said storage, the operation of the data broadcast screen held by said presenter.

10. The broadcast receiving device according to claim 9, further comprising a notifier that notifies a user that the operation of the data broadcast screen is inhibited by said operation restrictor.

11. A broadcast receiving method comprising the steps of:
receiving a broadcast signal of a data broadcast program that is tuned in to;
acquiring a data broadcast content from said broadcast signal that is received;
storing said data broadcast content that is acquired; and
presenting a data broadcast screen based on said data broadcast content that is stored, wherein
said step of presenting includes holding a presentation state of the data broadcast screen when a state of reception is a poor state and restarting, when the state of reception changes from the poor state to the good state and data broadcast programs received in the good state before and after said poor state are the same, the presentation of the data broadcast screen based on said data broadcast content that is stored.

12. The broadcast receiving method according to claim 11, wherein said step of presenting includes terminating, when the state of reception changes from the poor state to the good state and the data broadcast programs received in the good state before and after the poor state are different, the presentation of the data broadcast screen that has been held.

13. The broadcast receiving method according to claim 11, further comprising the step of selecting, when the state of reception changes from the poor state to the good state and the data broadcast programs received in the good state before and after said poor state are the same, restarting the presentation of the data broadcast screen based on said data broadcast content that is stored or terminating the presentation of the data broadcast screen that has been held, wherein said step of presenting includes, based on selection in said step of selecting, restarting the presentation of the data broadcast screen based on said data broadcast content that is stored or terminating the presentation of the data broadcast screen that has been held.

14. The broadcast receiving method according to claim 11, further comprising the steps of
operating said data broadcast screen that is presented, and
transmitting data indicating a content of the operation to a broadcast station.

15. The broadcast receiving method according to claim 7, further comprising the step of restricting, when the state of reception is the poor state, the operation of said data broadcast screen that is held.

16. A data broadcast screen presentation program that can be executed by a computer for presenting a data broadcast screen based on a broadcast signal of a data broadcast that is received, causing said computer to execute the processes of:
acquiring a data broadcast content from said broadcast signal that is received;
storing said data broadcast content that is acquired; and
presenting the data broadcast screen based on said data broadcast content that is stored, wherein
said process of presenting includes holding a presentation state of the data broadcast screen when a state of reception is a poor state and restarting, when the state of reception changes from the poor state to a good state and data broadcast programs received in the good state before and after said poor state are the same, the presentation of the data broadcast screen based on said data broadcast content that is stored.

17. The data broadcast screen presentation program according to claim 16, wherein said process of presenting includes terminating, when the state of reception changes from the poor state to the good state and the data broadcast programs received in the good state before and after the poor state are different, the presentation of the data broadcast screen that has been held.

18. The data broadcast screen presentation program according to claim 16, causing said computer to further execute the process of selecting, when the state of reception changes from the poor state to the good state and the data broadcast programs received in the good state before and after said poor state are the same, restarting the presentation of the data broadcast screen based on said data broadcast content that is stored or terminating the presentation of the data broadcast screen that has been held, wherein
said process of presenting includes, based on selection in said process of selecting, restarting the presentation of the data broadcast screen based on said data broadcast content that is stored or terminating the presentation of the data broadcast screen that has been held.

19. The data broadcast screen presentation program according to claim 16, causing said computer to further execute the processes of operating said data broadcast screen that is presented, and transmitting data indicating a content of the operation to a broadcast station.

20. The data broadcast screen presentation program according to claim 19, causing said computer to further execute the process of restricting, when the state of reception is the poor state, the operation of said data broadcast screen that has been held.
